(19) 

Europäisches
Patentamt
European
Patent Office
Office européen
des brevets

(11) **EP 4 546 888 A1**

(12) **EUROPEAN PATENT APPLICATION**
published in accordance with Art. 153(4) EPC

(43) Date of publication:
**30.04.2025 Bulletin 2025/18**

(21) Application number: **23858977.4**

(22) Date of filing: **20.07.2023**

(51) International Patent Classification (IPC):
**H04W 52/02** (2009.01)

(52) Cooperative Patent Classification (CPC):
**H04W 52/02; H04W 68/00; H04W 72/0446;
H04W 72/0453**

(86) International application number:
**PCT/CN2023/108407**

(87) International publication number:
**WO 2024/045941 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 CN 202211053984**

(71) Applicant: **ZTE Corporation
Shenzhen, Guangdong 518057 (CN)**

(72) Inventors:
• **LIU, Kun**
 **Shenzhen, Guangdong 518057 (CN)**
• **YANG, Weiwei**
 **Shenzhen, Guangdong 518057 (CN)**
• **DAI, Bo**
 **Shenzhen, Guangdong 518057 (CN)**
• **CHEN, Mengzhu**
 **Shenzhen, Guangdong 518057 (CN)**
• **HU, Youjun**
 **Shenzhen, Guangdong 518057 (CN)**

(74) Representative: **Aipex B.V.
Vestdijk 51
5611 CA Eindhoven (NL)**

(54) **SIGNAL GENERATION METHOD, AND ELECTRONIC DEVICE AND STORAGE MEDIUM**

(57)     Provided are a signal generation method, an electronic device, and a storage medium. The method includes configuring a signal to occupy at least one time-domain symbol in the time domain and at least one subcarrier in the frequency domain, where the bandwidth in the frequency domain includes N subcarriers, and N is greater than or equal to 1; determining information carried on the N subcarriers.

EP 4 546 888 A1

```
┌──────────────────────────────────────────────────────────────┐
│ Configure a signal to occupy at least one time-domain symbol   │   110
│ in the time domain and at least one subcarrier in the          │
│ frequency domain                                               │
└──────────────────────────────────────────────────────────────┘
                              │
                              ▼
┌──────────────────────────────────────────────────────────────┐
│   Determine information carried on the N subcarriers           │   120
└──────────────────────────────────────────────────────────────┘
```

**FIG. 1**

## Description

This application claims priority to Chinese Patent Application No. 202211053984.0 filed with the China National Intellectual Property Administration (CNIPA) on Aug. 31, 2022, the disclosure of which is incorporated herein by reference in its entirety.

TECHNICAL FIELD

The present application relates to the field of wireless communication technology, for example, a signal generation method, an electronic device, and a storage medium.

BACKGROUND

With the development of wireless communication technology, there are increasingly higher requirements for device power consumption. In addition to latency, reliability, and availability, energy efficiency of user equipment (UE) is also critical in the fifth-generation mobile communication technology (5G) system. Currently, 5G devices may need to be charged weekly or daily based on individual usage time. Typically, 5G devices consume tens of milliwatts of power in the radio resource control (RRC) idle or inactive state and consume hundreds of milliwatts of power in the RRC connected state. How to extend battery life is a necessity for improving energy efficiency and enhancing user experience. Power consumption depends on the length of the configured wake-up cycle, such as the paging cycle. To meet battery life requirements, high-value extended discontinuous reception (eDRX) cycles are expected to be used, leading to high latency, which is not suitable for services that require both battery life and low latency. To improve battery life, the current field has introduced the ultra-low-power wake-up signal (LP-WUS) mechanism. That is, a user uses a separate receiver to receive a low-power wake-up signal. This wake-up signal is used to activate the main radio device for data transmission and reception. When the UE does not detect the low-power wake-up signal, the main receiver enters a deep sleep mode, thus further reducing the power consumption of the terminal. However, there is currently no method for generating a low-power wake-up signal.

SUMMARY

The main objective of embodiments of the present application is to propose a signal generation method, an electronic device, and a storage medium to at least implement the generation of a low-power wake-up signal, enable ultra-low-power wake-up of devices in a deep sleep mode, reduce standby power consumption, and improve battery life of the devices.

Embodiments of the present application provide a signal generation method. The method includes the following.

A signal is configured to occupy at least one time-domain symbol in the time domain and at least one subcarrier in the frequency domain, where the bandwidth in the frequency domain includes N subcarriers, and N is greater than or equal to 1.

Information carried on the N subcarriers is determined.

Embodiments of the present application also provide an electronic device. The electronic device includes one or more processors and a memory configured to store one or more programs.

The one or more programs, when executed by the one or more processors, cause the one or more processors to perform the signal generation method according to any embodiment of the present application.

Embodiments of the present application also provide a computer-readable storage medium. The computer-readable storage medium stores one or more programs that, when executed by one or more processors, cause the one or more processors to perform the signal generation method according to any embodiment of the present application.

BRIEF DESCRIPTION OF DRAWINGS

FIG. 1 is a flowchart of a signal generation method according to embodiments of the present application.

FIG. 2 is an example diagram of a signal generation method according to embodiments of the present application.

FIG. 3 is another example diagram of a signal generation method according to embodiments of the present application.

FIG. 4 is another example diagram of a signal generation method according to embodiments of the present application.

FIG. 5 is another example diagram of a signal generation method according to embodiments of the present application.

FIG. 6 is another example diagram of a signal generation method according to embodiments of the present application.

FIG. 7 is a diagram illustrating the structure of a signal generation apparatus according to embodiments of the present application.

FIG. 8 is a diagram illustrating the structure of an electronic device according to embodiments of the present application.

DETAILED DESCRIPTION

It is to be understood that the specific embodiments described herein are intended to explain the present application and not to limit the present application.

Suffixes such as "module", "component", or "unit" used for indicating elements in the subsequent description are used for facilitating the description of the present application and have no particular meaning in themselves. Therefore, "module", "component", or "unit" can be used in a mixed manner.

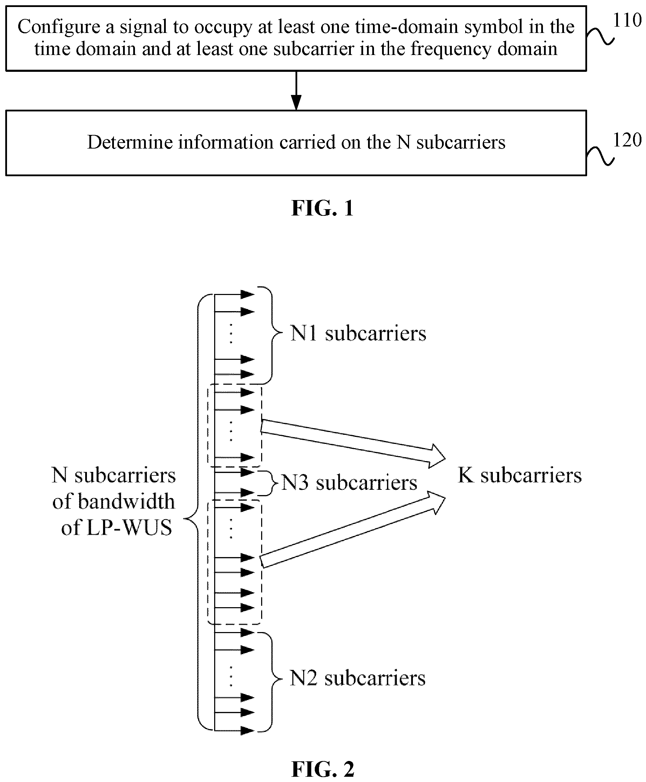

FIG. 1 is a flowchart of a signal generation method according to embodiments of the present application. The embodiments of the present application may be applied to the case of signal generation. The method may be performed by a signal generation apparatus. The apparatus may be implemented in software and/or hardware. With reference to FIG. 1, the method provided by the embodiments of the present application include the operations described below.

In S110, a signal is configured to occupy at least one time-domain symbol in the time domain and at least one subcarrier in the frequency domain, where the bandwidth in the frequency domain includes N subcarriers, and N is greater than or equal to 1.

In the embodiments of the present application, a signal that occupies at least one time-domain symbol in the time domain and at least one subcarrier in the frequency domain may be configured, and the signal may be used for ultra low-power wake-up. The bandwidth of the signal in the frequency domain may be composed of N subcarriers.

In S120, information carried on the N subcarriers is determined.

In the embodiments of the present application, the information carried on the N subcarriers occupied by the signal may be determined.

In some embodiments, determining the information carried on the N subcarriers includes at least one of the following: N1 subcarriers at the upper boundary of the bandwidth are used as a guard bandwidth, where N1 is greater than or equal to 0 and less than or equal to N; N2 subcarriers at the lower boundary of the bandwidth are used as a guard bandwidth, where N2 is greater than or equal to 0 and less than or equal to N; N3 subcarriers at the center of the N subcarriers are not filled with data or are filled with data of 0, where N3 is greater than or equal to 0 and less than or equal to N; or K subcarriers among the N subcarriers are filled with data, where K is greater than or equal to 1 and less than or equal to N.

In the embodiments of the present application, N1 subcarriers at the upper boundary of the bandwidth occupied by the signal are selected as the guard bandwidth, and N1 may be an integer greater than or equal to 0. It is understood that N1 is less than or equal to the total number N of subcarriers occupied by the signal. Correspondingly, in an embodiment, N2 subcarriers at the lower boundary of the bandwidth occupied by the signal may be selected as the guard bandwidth; N2 may be an integer greater than or equal to 0, and N2 may be less than or equal to N. In other embodiments, N3 subcarriers in the central part of the bandwidth occupied by the signal may be selected to not carry data or to be filled with zeros. In other embodiments, K subcarriers may be selected from N subcarriers to carry data, and it is understood that K may be less than or equal to N. On this basis, in some embodiments, one or more of the preceding embodiments may be combined to form the implementation.

In some embodiments, positions of the K subcarriers include at least one of the following: remaining subcarriers after removing the N1 subcarriers and the N2 subcarriers from the N subcarriers; or remaining subcarriers after removing the N1 subcarriers, the N2 subcarriers, and the N3 subcarriers from the N subcarriers.

In the embodiments of the present application, K subcarriers may be selected from the N subcarriers of the signal to carry data, and the K subcarriers may be the remaining subcarriers after removing the N1 and N2 subcarriers determined as the guard bandwidth in the preceding embodiments. In some other embodiments, the K subcarriers filled with data in the signal may be the remaining subcarriers after removing the subcarriers determined as the guard bandwidth and the subcarriers that are not filled with data or are filled with data of 0.

FIG. 2 is an example diagram of a signal generation method according to embodiments of the present application. With reference to FIG. 2, in the embodiment of the present application, an LP-WUS may occupy at least one time-domain symbol in the time domain, and the bandwidth occupied by the LP-WUS in the frequency domain may include N subcarriers. With reference to FIG. 2, among the N subcarriers, N1 and N2 subcarriers may be configured as the upper boundary guard bandwidth and the lower boundary guard bandwidth, respectively, where the guard bandwidth may not send information. N3 subcarriers at the center of the N subcarriers may also be selected to be not filled with data or be filled with data of 0. The remaining K subcarriers may be used to send the LP-WUS.

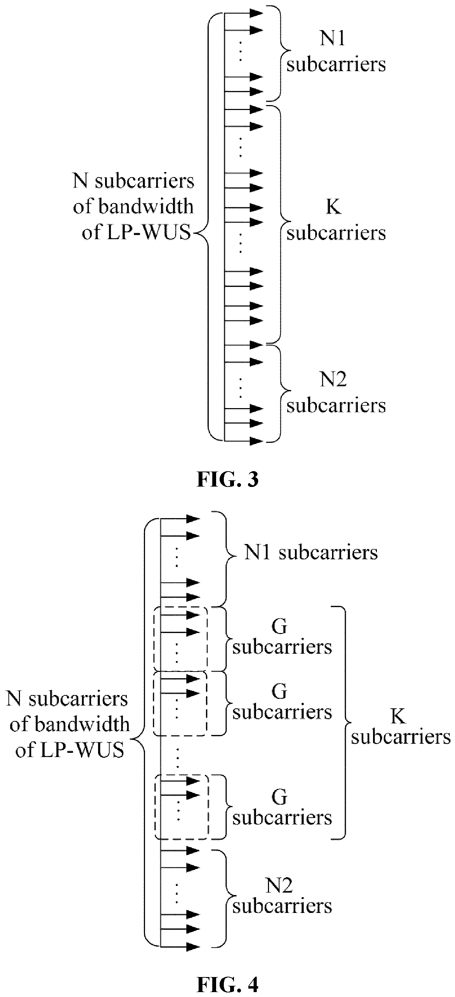

FIG. 3 is another example diagram of a signal generation method according to embodiments of the present application. With reference to FIG. 3, in the embodiments of the present application, an LP-WUS may occupy at least one time-domain symbol in the time domain, and the bandwidth occupied by the LP-WUS in the frequency domain may include N subcarriers. With reference to FIG. 3, among the N subcarriers, N1 and N2 subcarriers may be configured as the upper boundary guard bandwidth and the lower boundary guard bandwidth, respectively, where the guard bandwidth may not send information. The remaining K subcarriers may be used to send the LP-WUS.

In some embodiments, the method for determining positions of the K subcarriers includes the following: remaining subcarriers after removing the N1 subcarriers and the N2 subcarriers from the N subcarriers are divided into K subcarrier groups, where each subcarrier group includes G subcarriers, and G is an integer greater than or equal to 1; and one subcarrier is selected from each subcarrier group of the K subcarrier groups to form the K subcarriers.

In the embodiments of the present application, the K subcarriers may be determined by evenly dividing the remaining subcarriers, after removing the N1 subcarriers determined as the upper boundary guard bandwidth and the N2 subcarriers determined as the lower boundary guard bandwidth from the N subcarriers, into K subcarrier groups. Each subcarrier group may include G subcarriers, where G is an integer greater than or equal to 1. One subcarrier may be selected from each of the divided K subcarrier groups, and the selected K subcarriers may be used to be filled with data.

FIG. 4 is another example diagram of a signal generation method according to embodiments of the present application. With reference to FIG. 4, an LP-WUS may occupy at least one time-domain symbol in the time domain, the bandwidth occupied by the LP-WUS in the frequency domain may include N subcarriers, and N1 and N2 subcarriers in the N subcarriers may be configured as the upper boundary guard bandwidth and the lower boundary guard bandwidth, respectively, where the guard bandwidth may not send information. For the N subcarriers occupied by the signal, K subcarriers may be determined in the remaining subcarriers for being filled with data. The subcarriers after removing N1 and N2 are divided into K subcarrier groups, each subcarrier group includes G subcarriers, and one subcarrier is selected from each subcarrier group to form K subcarriers for being filled with data.

In some embodiments, the method for determining positions of the K subcarriers includes the following: the N subcarriers are divided into K subcarrier groups, where each subcarrier group includes G subcarriers, and G is an integer greater than or equal to 1; and one subcarrier is selected from each subcarrier group of the K subcarrier groups to form the K subcarriers.

In the embodiments of the present application, the N subcarriers occupied by the signal may be divided into K subcarrier groups, each subcarrier group may include G subcarriers, and one subcarrier may be selected from each of the K subcarrier groups to form the K subcarriers for being filled with data.

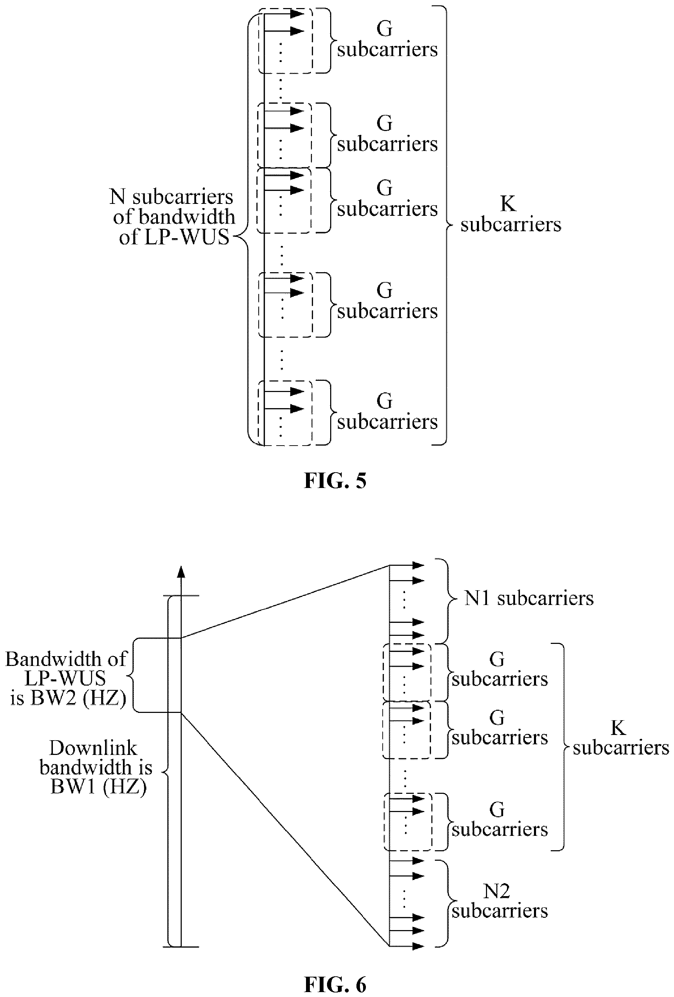

FIG. 5 is another example diagram of a signal generation method according to embodiments of the present application. With reference to FIG. 5, an LP-WUS may occupy at least one time-domain symbol in the time domain, and the bandwidth occupied by the LP-WUS in the frequency domain may include N subcarriers; the preceding N subcarriers may be divided into K subcarrier groups, each subcarrier group may include G subcarriers, and one subcarrier is selected from each subcarrier group to form K subcarriers for being filled with data.

In some embodiments, subcarriers forming the K subcarriers have the same index in their respective K subcarrier groups.

In the embodiments of the present application, the subcarriers determined to be filled with data may have the same index in their respective subcarrier groups.

In other embodiments, in the case where a selected subcarrier of the K subcarriers belongs to the N3 subcarriers, the selected subcarrier is not filled with data or is filled with data of 0.

In the embodiments of the present application, in the case where a subcarrier belongs to the selected K subcarriers and also belongs to the N3 subcarriers in the center of the N subcarriers that are not filled with data or are filled with data of 0, the subcarrier is not filled with data or is filled with data of 0.

In some other embodiments, in the case where a selected subcarrier of the K subcarriers belongs to the N1 subcarriers, the selected subcarrier is not filled with data or is filled with data of 0.

In the embodiments of the present application, for the selected K subcarriers for being filled with data, if one subcarrier among the K subcarriers falls within the range of the N1 subcarriers of the upper boundary guard bandwidth, the one subcarrier is not filled with data or is filled with data of 0.

In some other embodiments, in the case where a selected subcarrier of the K subcarriers belongs to the N2 subcarriers, the selected subcarrier is not filled with data or is filled with data of 0.

In the embodiments of the present application, for the selected K subcarriers, if the K subcarriers fall within the range of N2 subcarriers of the lower boundary guard bandwidth of the signal, the one subcarrier is not filled with data or is filled with data of 0.

In an embodiment, in the case where the signal supports at least two subcarrier spacings, the configuration of G includes the following: the subcarrier spacings include $f_{sc}$ and $2^{-n} \cdot f_{sc}$; in the case where a subcarrier spacing is $f_{sc}$ and G is configured as y, G is configured as $y \cdot 2^n$ in the case where the subcarrier spacing is $2^{-n} \cdot f_{sc}$, where y is an integer greater than or equal to 1, and n is an integer greater than or equal to 1.

In the embodiments of the present application, the signal may support multiple subcarrier spacings, and the value of G in each subcarrier group may include the following: the subcarrier spacings include $f_{sc}$ and $2^{-n} \cdot f_{sc}$; in the case where a subcarrier spacing is $f_{sc}$ and G is configured as y, G is configured as $y \cdot 2^n$ in the case where the subcarrier spacing is $2^{-n} \cdot f_{sc}$, where y is an integer greater than or equal to 1, and n is an integer greater than or equal to 1.

In some embodiments, the configuration of G includes at least one of the following: in the case where the subcarrier spacing is 30 KHz and G is configured as 1, G is configured as 2 in the case where the subcarrier spacing is 15 KHz; or in the case where the subcarrier spacing is 60 KHz and G is configured as 1, G is configured as 2 in the case where the subcarrier spacing is 30 KHz, and G is configured as 4 in the case where the subcarrier spacing is 15 KHz.

FIG. 6 is another example diagram of a signal generation method according to embodiments of the present application. With reference to FIG. 6, in an orthogonal frequency-division multiplexing (OFDM) wireless communication system, the downlink channel system bandwidth is BW1 (Hz), and the transmission of low-power wake-up signals is supported. The LP-WUS occupies at least one time-domain symbol in the time domain, the bandwidth occupied by the LP WUS in the frequency domain is BW2 (BW2 = 1.08 MHz), the subcarrier spacing configured for the LP-WUS is 30 kHz, and then the LP-WUS occupies 36 subcarriers in the frequency domain. A physical resource block (PRB) may be defined to include 12 subcarriers, and then the LP-WUS occupies 3 PRBs in the frequency domain. As shown in FIG. 6, N1 and N2 (N1 = N2 = 3) subcarriers are configured as guard bandwidth, where the guard bandwidth does not send information. 30 (36 - 3 = 30) subcarriers are present that can be used to send the LP-WUS. In this embodiment, G = 1, that is, 30 subcarriers are occupied in the frequency domain for sending the LP WUS, that is, K = 30. The data filled on the K (K = 30) subcarriers is a sequence $S_{30}$ of length 30, marked as $S_{30} = [s_0, s_1, s_2, s_3 ..., s_{29}]$.

In another embodiment, when the subcarrier spacing configured for the LP-WUS is 15 kHz, the bandwidth occupied by the LP-WUS in the frequency domain is BW2 (BW2 = 1.08 MHz), and the LP-WUS occupies 72 subcarriers in the frequency domain. If N1 and N2 (N1 = N2 = 6) subcarriers are configured as the guard bandwidth, the number of subcarriers that can be used to send the LP WUS is at most 60 (72 - 12 = 60).

In this embodiment, the LP-WUS also uses a sequence $S_{30}$ of length 30, where $S_{30} = [s_0, s_1, s_2, s_3..., s_{29}]$. Since G = y = 1 when the subcarrier spacing is 30 kHz, 30/15 = 2, and n = 1, that is, $G = y2^n = 1*2 = 2$. In other words, each subcarrier group includes 2 subcarriers, and the UE selects one subcarrier in one subcarrier group as the subcarrier for sending LP-WUS. Then the number of subcarriers occupied in the frequency domain for sending LP-WUS is 30, and a sequence $S_{30}$ of length 30 is also used, where $S_{30} = [s_0, s_1, s_2, s_3..., s_{29}]$.

In some embodiments, the data filled on the K subcarriers is a sequence S of length 2*M, the sequence S is composed of two sequences each having a length of M, and $S = [A_M, B_M]$.

$A_M$ denotes a first sequence of length M, $B_M$ denotes a second sequence of length M, and K = 2*M.

$A_M$ and $B_M$ include at least one of the following: $A_M = [a_0, a_1, a_2, a_3..., a_{M-1}]$, and $B_M = [b_0, b_1, b_2, b_3, ..., b_{M-1}]$; $A_M = [a_0, a_1, a_2, a_3..., a_{M-1}]$, and $B_M = [-b_0, -b_1, -b_2, -b_3, ..., -b_{M-1}]$; $A_M = [-a_0, -a_1, -a_2, -a_3..., -a_{M-1}]$, and $B_M = [b_0, b_1, b_2, b_3, ..., -b_{M-1}]$; or $A_M = [-a_0, -a_1, -a_2, -a_3..., -a_{M-1}]$, and $B_M = [-b_0, -b_1, -b_2, -b_3, ..., -b_{M-1}]$.

$A_M$ and $B_M$ satisfy at least one of the following properties:

$A_M$ and $B_M$ are a Gray complementary sequence pair;

when $A_M$ and $B_M$ are real number sequences, $\sum_{n=0}^{M-1}(a_n \cdot a_n + b_n \cdot b_n) = 2M$ in the case where j = 0;

when $A_M$ and $B_M$ are real number sequences, $\sum_{n=0}^{M-1-j}(a_n \cdot a_{n+j} + b_n \cdot b_{n+j}) = 0$ in the case where j ≠ 0;

when $A_M$ and $B_M$ are complex number sequences, $\sum_{n=0}^{M-1}(a_n \cdot a'_n + b_n \cdot b'_n) = 2M$ in the case where j = 0, where $a'_n$ is the conjugate of $a_n$, and $b'_n$ is the conjugate of $b_n$; or

when $A_M$ and $B_M$ are complex number sequences, $\sum_{n=0}^{M-1-j}(a_n \cdot a'_{n+j} + b_n \cdot b'_{n+j}) = 0$ in the case where j $\neq$ 0, where $a'_{n+j}$ is the conjugate of $a_{n+j}$, and $b'_{n+j}$ is the conjugate of $b_{n+j}$.

In some other embodiments, the data filled on the K subcarriers is a sequence S of length 4*M, the sequence S is composed of two sequences each having a length of 2*M, and S = [$A_{2*M}$, $B_{2*M}$].

$A_{2*M}$ denotes a first sequence of length 2*M, $B_{2*M}$ denotes a second sequence of length 2*M, and K = 4*M.

$A_{2*M}$ and $B_{2*M}$ include at least one of the following: $A_{2*M}$ = [$A_M$, $B_M$], and $B_{2*M}$ = [-$A_M$, $B_M$]; $A_{2*M}$ = [$A_M$, $B_M$], and $B_{2*M}$ = [-$A_M$, -$B_M$]; $A_{2*M}$ = [-$A_M$, -$B_M$], and $B_{2*M}$ = [-$A_M$, $B_M$]; or $A_{2*M}$ = [-$A_M$, -$B_M$], and $B_{2*M}$ = [$A_M$, -$B_M$].

$A_M$ and $B_M$ satisfy at least one of the following properties:

$A_M$ and $B_M$ are a Gray complementary sequence pair;

when $A_M$ and $B_M$ are real number sequences, $\sum_{n=0}^{M-1}(a_n \cdot a_n + b_n \cdot b_n) = 2M$ in the case where j = 0;

when $A_M$ and $B_M$ are real number sequences, $\sum_{n=0}^{M-1-j}(a_n \cdot a_{n+j} + b_n \cdot b_{n+j}) = 0$ in the case where j $\neq$ 0;

when $A_M$ and $B_M$ are complex number sequences, $\sum_{n=0}^{M-1}(a_n \cdot a'_n + b_n \cdot b'_n) = 2M$ in the case where j = 0; where $a'_n$ is the conjugate of $a_n$, and $b'_n$ is the conjugate of $b_n$; or

when $A_M$ and $B_M$ are complex number sequences, $\sum_{n=0}^{M-1-j}(a_n \cdot a'_{n+j} + b_n \cdot b'_{n+j}) = 0$ in the case where j $\neq$ 0; where $a'_{n+j}$ is the conjugate of $a_{n+j}$, and $b'_{n+j}$ is the conjugate of $b_{n+j}$.

In some embodiments, the data filled on the K subcarriers is a sequence S of length 8*M, the sequence S is composed of two sequences each having a length of 4*M, and S = [$A_{4*M}$, $B_{4*M}$].

$A_{4*M}$ denotes a first sequence of length 4*M, $B_{4*M}$ denotes a second sequence of length 4*M, and K = 8*M.

$A_{4*M}$ and $B_{4*M}$ include at least one of the following: $A_{4*M}$ = [$A_{2*M}$, $B_{2*M}$], and $B_{4*M}$ = [-$A_{2*M}$, $B_{2*M}$]; $A_{4*M}$ = [$A_{2*M}$, $B_{2*M}$], and $B_{4*M}$ = [-$A_{2*M}$, -$B_{2*M}$]; $A_{4*M}$ = [-$A_{2*M}$, -$B_{2*M}$], and $B_{4*M}$ = [-$A_{2*M}$, $B_{2*M}$]; or $A_{4*M}$ = [-$A_{2*M}$, -$B_{2*M}$], and $B_{4*M}$ = [$A_{2*M}$, -$B_{2*M}$].

$A_{2*M}$ and $B_{2*M}$ include at least one of the following: $A_{2*M}$ = [$A_M$, $B_M$], and $B_{2*M}$ = [-$A_M$, $B_M$]; $A_{2*M}$ = [$A_M$, $B_M$], and $B_{2*M}$ = [-$A_M$, -$B_M$]; $A_{2*M}$ = [-$A_M$, -$B_M$], and $B_{2*M}$ = [-$A_M$, $B_M$]; or $A_{2*M}$ = [-$A_M$, -$B_M$], and $B_{2*M}$ = [$A_M$, -$B_M$].

$A_M$ and $B_M$ satisfy at least one of the following properties:

$A_M$ and $B_M$ are a Gray complementary sequence pair;

when $A_M$ and $B_M$ are real number sequences, $\sum_{n=0}^{M-1}(a_n \cdot a_n + b_n \cdot b_n) = 2M$ in the case where j = 0;

when $A_M$ and $B_M$ are real number sequences, $\sum_{n=0}^{M-1-j}(a_n \cdot a_{n+j} + b_n \cdot b_{n+j}) = 0$ in the case where j $\neq$ 0;

when $A_M$ and $B_M$ are complex number sequences, $\sum_{n=0}^{M-1}(a_n \cdot a'_n + b_n \cdot b'_n) = 2M$ in the case where j = 0; where $a'_n$ is the conjugate of $a_n$, and $b'_n$ is the conjugate of $b_n$; or

when $A_M$ and $B_M$ are complex number sequences, $\sum_{n=0}^{M-1-j}(a_n \cdot a'_{n+j} + b_n \cdot b'_{n+j}) = 0$ in the case where j $\neq$ 0; where $a'_{n+j}$ is the conjugate of $a_{n+j}$, and $b'_{n+j}$ is the conjugate of $b_{n+j}$.

In some other embodiments, the data filled on the K subcarriers is a sequence S of length $2^{i+2}$*M, the sequence S is composed of two sequences each having a length of $2^{i+1}$*M, and S = [$A_{2^{i+1}*M}$, $B_{2^{i+1}*M}$].

$A_{2^{i+1}*M}$ denotes a first sequence of length $2^{i+1}$*M, and $B_{2^{i+1}*M}$ denotes a second sequence of length $2^{i+1}$*M.

K = $2^{i+2}*M$, i is an integer greater than or equal to 0, and M is an integer greater than or equal to 1.

$A_{2^{i+1}*M}$, and $B_{2^{i+1}*M}$ include at least one of the following:

$$A_{2^{i+1}*M} = [A_{2^i*M},\ B_{2^i*M}],\ \text{and}\ B_{2^{i+1}*M} = [-A_{2^i*M},\ B_{2^i*M}];$$

$$A_{2^{i+1}*M} = [A_{2^i*M},\ B_{2^i*M}],\ \text{and}\ B_{2^{i+1}*M} = [-A_{2^i*M},\ -B_{2^i*M}];$$

$$A_{2^{i+1}*M} = [-A_{2^i*M},\ -B_{2^i*M}],\ \text{and}\ B_{2^{i+1}*M} = [-A_{2^i*M},\ B_{2^i*M}];$$

or

$$A_{2^{i+1}*M} = [-A_{2^i*M},\ -B_{2^i*M}],\ \text{and}\ B_{2^{i+1}*M} = [A_{2^i*M},\ -B_{2^i*M}];$$

where i is an integer greater than or equal to 0.

In some embodiments, the first sequence and the second sequence are a Gray complementary sequence pair.

In some embodiments, the expression of the first sequence is $A_{2^{i+1}*M} = [a_0, a_1, a_2, a_3..., a_{P-1}]$, the expression of the second sequence is $B_{2^{i+1}*M} = [b_0, b_1, b_2, b_3, ..., b_{P-1}]$, and accordingly, the first sequence and the second sequence satisfy at least one of the following properties:

when the first sequence and the second sequence are real number sequences, $\sum_{n=0}^{P-1}(a_n \cdot a_n + b_n \cdot b_n) = 2P$ in the case where j = 0;

when the first sequence and the second sequence are real number sequences, $\sum_{n=0}^{P-1-j}(a_n \cdot a_{n+j} + b_n \cdot b_{n+j}) = 0$ in the case where j ≠ 0;

when the first sequence and the second sequence are complex number sequences, $\sum_{n=0}^{P-1}(a_n \cdot a'_n + b_n \cdot b'_n) = 2P$ in the case where j = 0; where $a'_n$ is the conjugate of $a_n$, and $b'_n$ is the conjugate of $b_n$; or

when the first sequence and the second sequence are complex number sequences, $\sum_{n=0}^{P-1-j}(a_n \cdot a'_{n+j} + b_n \cdot b'_{n+j}) = 0$ in the case where j ≠ 0; where $a'_{n+j}$ is the conjugate of $a_{n+j}$, and $b'_{n+j}$ is the conjugate of $b_{n+j}$;

where P = $2^{i+1} * M$, and i is an integer greater than or equal to 0.

In some other embodiments, the first sequence is $A_{2^i*M} = [a_0, a_1, a_2, a_3...., a_{L-1}]$, the second sequence is $B_{2^i*M} = [b_0, b_1, b_2, b_3, ..., b_{L-1}]$, and accordingly, the sequence $A_{2^i*M}$ and the sequence $A_{2^i*M}$ satisfy at least one of the following properties:

when the first sequence and the second sequence are real number sequences, $\sum_{n=0}^{L-1}(a_n \cdot a_n + b_n \cdot b_n) = 2L$ in the case where j = 0;

when the first sequence and the second sequence are real number sequences, $\sum_{n=0}^{L-1-j}(a_n \cdot a_{n+j} + b_n \cdot b_{n+j})$ = 0 in the case where j ≠ 0;

when the first sequence and the second sequence are complex number sequences, $\sum_{n=0}^{L-1}(a_n \cdot a'_n + b_n \cdot b'_n) = 2L$ in the case where j = 0; where $a'_n$ is the conjugate of $a_n$, and $b'_n$ is the conjugate of $b_n$; or

when the first sequence and the second sequence are complex number sequences, $\sum_{n=0}^{L-1-j}(a_n \cdot a'_{n+j} + b_n \cdot b'_{n+j}) = 0$ in the case where j ≠ 0; where $a'_{n+j}$ is the conjugate of $a_{n+j}$, and $b'_{n+j}$ is the conjugate of $b_{n+j}$;

where L = $2^i$ * M, and i is an integer greater than or equal to 0.

In the embodiments of the present application, the frequency domain expansion scheme of the Gray complementary sequence is applied for K subcarrier. When K = 2*M, the data filled on the K subcarriers is a sequence $S_{2M}$ of length 2*M, marked as $S_{2M} = [s_0, s_1, s_2, s_3..., s_{2M-1}]$. The sequence $S_{2M}$ is composed of 2 sequences of length M, that is, sequence $A_M = [a_0, a_1, a_2, a_3..., a_{M-1}]$ and sequence $B_M = [b_0, b_1, b_2, b_3, ..., b_{M-1}]$, and the composition method includes at least one of the following:

$$S_{2M} = S_{2M}^1 = [A_M, \ B_M], \text{ that is, } [a_0, a_1, a_2, a_3..., a_{M-1}, b_0, b_1, b_2, b_3, ..., b_{M-1}];$$

$$S_{2M} = S_{2M}^2 = [A_M, -B_M], \text{ that is, } [a_0, a_1, a_2, a_3..., a_{M-1}, -b_0, -b_1, -b_2, -b_3, ..., -b_{M-1}];$$

$$S_{2M} = S_{2M}^3 = [-A_M, \ B_M], \text{ that is, } [-a_0, -a_1, -a_2, -a_3..., -a_{M-1}, b_0, b_1, b_2, b_3, ..., b_{M-1}];$$

or

$$S_{2M} = S_{2M}^4 = [- \ A_M \ , \ - \ B_M \ ],$$

that is,

$$[-a_0, -a_1, -a_2, -a_3..., -a_{M-1}, -b_0, -b_1, -b_2, -b_3, ..., -b_{M-1}].$$

In an embodiment, $A_M$ and $B_M$ are a Gray complementary sequence pair.
In an embodiment, $A_M$ and $B_M$ satisfy the following properties:
it is defined that the sequence A = $[a_0, a_1, a_2, a_3..., a_{M-1}]$ and the sequence B = $[b_0, b_1, b_2, b_3, ..., b_{M-1}]$, then

(1) when j = 0, $\sum_{n=0}^{M-1}(a_n \cdot a_n + b_n \cdot b_n) = 2M$;

(2) when j ≠ 0, $\sum_{n=0}^{M-1-j}(a_n \cdot a_{n+j} + b_n \cdot b_{n+j}) = 0$.

In some embodiments, when K = 4*M, the data filled on K subcarriers is a sequence $S_{4M}$ of length 4*M, marked as $S_{4M} = [s_0, s_1, s_2, s_3..., s_{4M-1}]$. The sequence $S_{4M}$ is composed of 2 sequences each having a length of 2*M, that is, the sequence $S_{4M}$ is composed of the sequence $C_{2M}$ and the sequence $D_{2M}$, that is, $S_{4M} = [C_{2m}, D_{2M}]$.
The sequence $C_{2M}$ and the sequence $D_{2M}$ are at least one of the following:

the sequence

$$C_{2M} = [A_M, \ B_M], \text{ and the sequence } D_{2M} = [-A_M, \ B_M];$$

the sequence

$$C_{2M} = [A_M,\ B_M], \text{ and the sequence } D_{2M} = [A_M,\ -B_M];$$

the sequence

$$C_{2M} = [-A_M,\ -B_M], \text{ and the sequence } D_{2M} = [A_M,\ -B_M];$$

or
the sequence

$$C_{2M} = [-A_M,\ -B_M], \text{ and the sequence } D_{2M} = [-A_M,\ B_M].$$

In some embodiments, when K = 8*M, the data filled on K subcarriers is a sequence $S_{8M}$ of length 8*M, marked as $S_{8M} = [s_0, s_1, s_2, s_3..., s_{8M-1}]$. The sequence $S_{8M}$ is composed of 2 sequences each having a length of 4*M, that is, the sequence $S_{8M}$ is composed of the sequence $E_{4M}$ and the sequence $F_{4M}$, that is. $S_{8M} = [E_{4M}, F_{4M}]$.

The sequence $E_{4M}$ and the sequence $F_{4m}$ are at least one of the following:

the sequence

$$E_{4M} = [C_{2M},\ D_{2M}], \text{ and the sequence } F_{4M} = [-C_{2M},\ D_{2M}];$$

the sequence

$$E_{4M} = [C_{2M},\ D_{2M}], \text{ and the sequence } F_{4M} = [C_{2M},\ -D_{2M}];$$

the sequence

$$E_{4M} = [-C_{2M},\ -D_{2M}], \text{ and the sequence } F_{4M} = [C_{2M},\ -D_{2M}];$$

or
the sequence

$$E_{4M} = [-C_{2M},\ -D_{2M}], \text{ and the sequence } F_{4M} = [-C_{2M},\ D_{2M}].$$

For example, when K = $2^{i+2}$*M, the data filled on the K subcarriers is [$A_{2^{i+1}*M}$, $B_{2^{i+1}*M}$, where $A_{2^{i+1}*M}$ and $B_{2^{i+1}*M}$ are at least one of the following:

$$A_{2^{i+1}*M} = [A_{2^i*M},\ B_{2^i*M}], \text{ and } B_{2^{i+1}*M} = [-A_{2^i*M},\ B_{2^i*M}];$$

$$A_{2^{i+1}*M} = [A_{2^i*M},\ B_{2^i*M}], \text{ and } B_{2^{i+1}*M} = [-A_{2^i*M},\ -B_{2^i*M}];$$

$$A_{2^{i+1}*M} = [-A_{2^i*M},\ -B_{2^i*M}], \text{ and } B_{2^{i+1}*M} = [-A_{2^i*M},\ B_{2^i*M}];$$

or

$$A_{2^{i+1}*M} = [-A_{2^i*M},\ -B_{2^i*M}], \text{ and } B_{2^{i+1}*M} = [A_{2^i*M},\ -B_{2^i*M}];$$

where i is an integer greater than or equal to 0.

When i = 0, $A_{2^i*M}$ and $B_{2^i*M}$ are $A_M$ and $B_M$, and $A_M$ and $B_M$ satisfies at least one of the following:

$A_M$ and $B_M$ are a Gray complementary sequence pair; or

$A_M$ and the sequence $B_M$ satisfy the following properties: it is defined that the sequence $A = [a_0, a_1, a_2, a_3...a_{M-1}]$ and

the sequence B = [$b_0$, $b_1$, $b_2$, $b_3$,..., $b_{M-1}$], then

(1) when j = 0,

$$\sum_{n=0}^{M-1}(a_n \cdot a_n + b_n \cdot b_n) = 2M;$$

(2) when j ≠ 0,

$$\sum_{n=0}^{M-1-j}(a_n \cdot a_{n+j} + b_n \cdot b_{n+j}) = 0.$$

In some embodiments, the data filled on the K subcarriers is a sequence S of length 2*M, the sequence S is composed of two sequences each having a length of M, and S = [$A_M$, $B_M$].

$A_M$ denotes a first sequence of length M, $B_M$ denotes a second sequence of length M, and K = 2*M.

$A_M$ and $B_M$ include at least one of the following:

$$A_M = [e^{j\theta_1}a_0, e^{j\theta_1}a_1, e^{j\theta_1}a_2, e^{j\theta_1}a_3 \ldots, e^{j\theta_1}a_{M-1}];$$

and

$$B_M = [e^{j\theta_2}b_0, e^{j\theta_2}b_1, e^{j\theta_2}b_2, e^{j\theta_2}b_3, \ldots, e^{j\theta_2}b_{M-1}].$$

In some other embodiments, the data filled on the K subcarriers is a sequence S of length 4*M, the sequence S is composed of two sequences each having a length of 2*M, and S = [$A_{2*M}$, $B_{2*M}$].

$A_{2*M}$ denotes a first sequence of length 2*M, $B_{2*M}$ denotes a second sequence of length 2*M, and K = 4*M.

$A_{2*M}$ and $B_{2*M}$ include the following: $A_{2*M}$ = [ $e^{j\theta_1}A_M$ , $e^{j\theta_2}B_M$ ], and $B_{2*M}$ =[$e^{j\theta_3}A_M$, $e^{j\theta_4}B_M$]; where $(\theta_1 - \theta_2) - (\theta_3 - \theta_4)$ = Q*180° or |$\theta_1 - \theta_2$| - |$\theta_3 - \theta_4$| = Q*180°, and Q is an integer, and $\theta_1$, $\theta_2$, $\theta_3$, and $\theta_4$ are real numbers.

In some embodiments, the data filled on the K subcarriers is a sequence S of length 8*M, the sequence S is composed of two sequences each having a length of 4*M, and S = [$A_{4*M}$, $B_{4*M}$].

$A_{4*M}$ denotes a first sequence of length 4*M, $B_{4*M}$ denotes a second sequence of length 4*M, and K = 8*M.

$A_{4*M}$ and $B_{4*M}$ include the following: $A_{4*M}$ = [$e^{j\theta_5}A_{2*M}$, $e^{j\theta_6}B_{2*M}$], and $B_{4*M}$ =[$e^{j\theta_7}A_{2*M}$, $e^{j\theta_8}B_{2*M}$], where $(\theta_5 - \theta_6) - (\theta_7 - \theta_8)$ = Q*180° or |$\theta_5 - \theta_6$| - |$\theta_7 - \theta_8$| = Q*180°, and Q is an integer.

In some other embodiments, the data filled on the K subcarriers is a sequence S of length $2^{i+2}$*M, the sequence S is composed of two sequences each having a length of $2^{i+1}$M, and S = [$A_{2^{i+1}*M}$ , $B_{2^{i+1}*M}$].

$A_{2^{i+1}*M}$ denotes a first sequence of length $2^{i+1}$*M, and $B_{2^{i+1}*M}$ denotes a second sequence of length $2^{i+1}$*M.

K = $2^{i+2}$*M, i is an integer greater than or equal to 0, and M is an integer greater than or equal to 1.

$A_{2^{i+1}*M}$ and $B_{2^{i+1}*M}$ include at least one of the following: $A_{2^{i+1}*M} = [e^{j\theta_1^i}A_{2^i*M}, \quad e^{j\theta_2^i}B_{2^i*M}]$ , and $B_{2^{i+1}*M} = [e^{j\theta_3^i}A_{2^i*M}, \quad e^{j\theta_4^i}B_{2^i*M}]$ ; where $(\theta_1^i - \theta_2^i) - (\theta_3^i - \theta_4^i) = Q*180°$ or $|\theta_1^i - \theta_2^i| - |\theta_3^i - \theta_4^i| = Q*180°$, and Q is an integer.

In some embodiments, the first sequence and the second sequence are a Gray complementary sequence pair.

In some embodiments, the expression of the first sequence is $A_{2^{i+1}*M}$, = [$a_0$, $a_1$, $a_2$, $a_3$..., $a_{P-1}$] , the expression of the second sequence is $B_{2^{i+1}*M}$ = [$b_0$, $b_1$, $b_2$, $b_3$, ..., $b_{P-1}$], and accordingly, the first sequence and the second sequence satisfy at least one of the following properties:

in the case where j = 0, $\sum_{n=0}^{P-1}(a_n \cdot a_n + b_n \cdot b_n) = 2P$ ; or

in the case where j ≠ 0, $\sum_{n=0}^{P-1-j}(a_n \cdot a_{n+j} + b_n \cdot b_{n+j}) = 0$ ;

where P = $2^{i+1}$ * M, and i is an integer greater than or equal to 0.

In some other embodiments, the first sequence is $A_{2^i*M}$ = [$a_0$, $a_1$, $a_2$, $a_3$...., $a_{L-1}$], the second sequence is $B_{2^i*M}$ =

[$b_0$, $b_1$, $b_2$, $b_3$, ..., $b_{L-1}$], and accordingly, the sequence $A_{2i*M}$ and the sequence $B_{2i*M}$ satisfy at least one of the following properties:

in the case where j = 0, $\quad \sum_{n=0}^{L-1}(a_n \cdot a_n \ + \ b_n \cdot b_n) = 2L$ ; or

in the case where j ≠ 0, $\quad \sum_{n=0}^{L-1-j}(a_n \cdot a_{n+j} \ + \ b_n \cdot b_{n+j}) = 0$ ;

where $L = 2^i * M$, and i is an integer greater than or equal to 0.

In some embodiments, in the case where $K = 2^y*M + X$, where y is an integer greater than or equal to 0, M is an integer greater than or equal to 1, and X is an integer greater than or equal to 1, the method also includes the following: generating a sequence S of length $2^y*M$ and a sequence $S_X$ of length X; and filling the K subcarriers based on the sequence $S_X$ and the sequence S.

In the embodiments of the present application, in the case where the value of K is not an integer multiple of 2M, in an example embodiment, K is ($2^y*M + X$), a sequence S of length $2^y*M$ and a sequence $S_X$ of length X may be generated first, and K subcarriers may be filled based on the sequence $S_X$ and sequence S.

In some embodiments, generating the sequence $S_X$ of length X includes at least one of the following: generating the sequence $S_X$ of all zeros of length X; randomly generating the sequence $S_X$ of length X; generating the sequence $S_X$ of length X according to a preset formula; forming the sequence $S_X$ by the first X elements in the sequence S; forming the sequence $S_X$ by the last X elements in the sequence S; or forming the sequence $S_X$ by selecting X elements from the sequence S.

In some other embodiments, filling the K subcarriers based on the sequence $S_X$ and the sequence S includes generating a sequence $S_K$ of length K, where the generation of the sequence $S_X$ includes at least one of the following: $S_X = [S, S_X]$; or $S_K = [S_X, S]$.

In some embodiments, on the basis that the data filled on the K subcarriers is the sequence $S_K$, a deformation of $S_K$ is performed, and the deformation includes at least one of the following:

a unified scrambling code is added to the sequence $S_K$, that is, each element in the $S_K$ needs to be multiplied by a certain variable, and the value of the variable is determined by at least one of the following: the time-domain symbol where the subcarrier is located; the frequency domain position where the K subcarriers are located; or the index information of the base station or cell that sends the sequence $S_K$;

scrambling codes are added to the sequence $S_K$ based on respective subcarriers, that is, elements in the $S_K$ need to be multiplied by respective certain variables, and a value of a respective variable is at least determined by the index of a subcarrier where an element is located; or

an offset is added to the sequence $S_K$, that is, each element in the $S_K$ needs to be added or subtracted by a certain offset, and the value of the offset is the same value for each subcarrier or at least determined by the index of the subcarrier where the element is located.

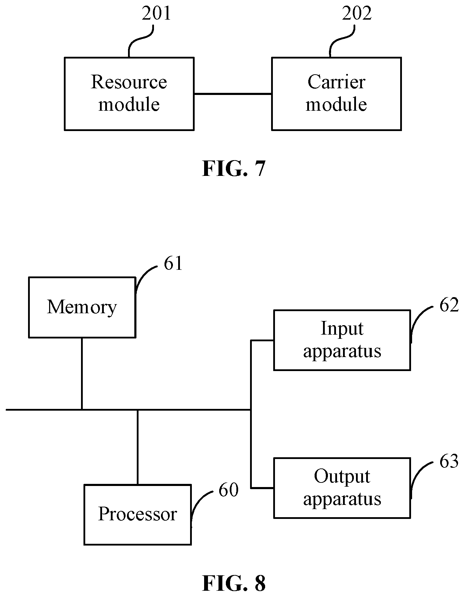

FIG. 7 is a diagram illustrating the structure of a signal generation apparatus according to embodiments of the present application. The apparatus may perform the signal generation method according to any embodiment of the present application and has the functional modules and beneficial effects corresponding to the applied method. The apparatus may be implemented by software and/or hardware. As shown in FIG. 7, the apparatus provided in the embodiments of the present application mainly includes a resource module 201 and a carrier module 202.

The resource module 201 is configured to configure a signal to occupy at least one time-domain symbol in the time domain and at least one subcarrier in the frequency domain, where the bandwidth in the frequency domain includes N subcarriers, and N is greater than or equal to 1.

The carrier module 202 is configured to determine information carried on the N subcarriers.

In the embodiment of the present application, the resource module configures the time-domain symbol and subcarriers occupied by the signal in the time domain and the frequency domain, and the carrier module determines the information carried on the N subcarriers, so as to at least implement the generation of a low-power wake-up signal, enable ultra-low-power wake-up of devices in a deep sleep mode, reduce standby power consumption, and improve battery life of the devices.

In some embodiments, the carrier module 202 is configured to determine at least one of the following: N1 subcarriers at the upper boundary of the bandwidth are used as a guard bandwidth, where N1 is greater than or equal to 0 and less than or equal to N; N2 subcarriers at the lower boundary of the bandwidth are used as a guard bandwidth, where N2 is greater than or equal to 0 and less than or equal to N; N3 subcarriers at the center of the N subcarriers are not filled with data or are filled with data of 0, where N3 is greater than or equal to 0 and less than or equal to N; or K subcarriers among the N subcarriers are filled with data, where K is greater than or equal to 1 and less than or equal to N.

In some embodiments, positions of the K subcarriers include at least one of the following: remaining subcarriers after removing the N1 subcarriers and the N2 subcarriers from the N subcarriers; or remaining subcarriers after removing the N1 subcarriers, the N2 subcarriers, and the N3 subcarriers from the N subcarriers.

In some embodiments, the method for determining positions of the K subcarriers includes the following: remaining subcarriers after removing the N1 subcarriers and the N2 subcarriers from the N subcarriers are divided into K subcarrier groups, where each subcarrier group includes G subcarriers, and G is an integer greater than or equal to 1; and one subcarrier is selected from each subcarrier group of the K subcarrier groups to form the K subcarriers.

In some embodiments, the method for determining positions of the K subcarriers includes the following: the N subcarriers are divided into K subcarrier groups, where each subcarrier group includes G subcarriers, and G is an integer greater than or equal to 1; and one subcarrier is selected from each subcarrier group of the K subcarrier groups to form the K subcarriers.

In some embodiments, subcarriers forming the K subcarriers have the same index in their respective K subcarrier groups.

In some embodiments, in the case where a selected subcarrier of the K subcarriers belongs to the N3 subcarriers, the selected subcarrier is not filled with data or is filled with data of 0.

In some embodiments, in the case where a selected subcarrier of the K subcarriers belongs to the N1 subcarriers, the selected subcarrier is not filled with data or is filled with data of 0.

In some embodiments, in the case where a selected subcarrier of the K subcarriers belongs to the N2 subcarriers, the selected subcarrier is not filled with data or is filled with data of 0.

In some embodiments, in the case where the signal supports at least two subcarrier spacings, the configuration of G includes the following: the subcarrier spacings include $f_{sc}$ and $2^{-n} \cdot f_{sc}$; in the case where a subcarrier spacing is $f_{sc}$ and G is configured as y, G is configured as $y \cdot 2^n$ in the case where the subcarrier spacing is $2^{-n} \cdot f_{sc}$, where y is an integer greater than or equal to 1, and n is an integer greater than or equal to 1.

In some embodiments, the configuration of G includes at least one of the following:

in the case where the subcarrier spacing is 30 KHz, G is configured as 1, G is configured as 2 in the case where the subcarrier spacing is 15 KHz; or

in the case where the subcarrier spacing is 60 KHz, G is configured as 1, G is configured as 2 in the case where the subcarrier spacing is 30 KHz, and G is configured as 4 in the case where the subcarrier spacing is 15 KHz.

In some embodiments, the data filled on the K subcarriers is a sequence S of length 2*M, the sequence S is composed of two sequences each having a length of M, and S = [$A_M$, $B_M$].

$A_M$ denotes a first sequence of length M, $B_M$ denotes a second sequence of length M, and K = 2*M.

In some embodiments, $A_M$ and $B_M$ include at least one of the following:

$$A_M = [a_0, a_1, a_2, a_3 \ldots, a_{M-1}], \text{ and } B_M = [b_0, b_1, b_2, b_3, \ldots, b_{M-1}];$$

$$A_M = [a_0, a_1, a_2, a_3 \ldots, a_{M-1}], \text{ and } B_M = [-b_0, -b_1, -b_2, -b_3, \ldots, -b_{M-1}];$$

$$A_M = [-a_0, -a_1, -a_2, -a_3 \ldots, -a_{M-1}], \text{ and } B_M = [b_0, b_1, b_2, b_3, \ldots, b_{M-1}];$$

or

$$A_M = [-a_0, -a_1, -a_2, -a_3 \ldots, -a_{M-1}], \text{ and } B_M = [-b_0, -b_1, -b_2, -b_3, \ldots, -b_{M-1}].$$

In some other embodiments, $A_M$ and $B_M$ include the following:

$$A_M = [e^{j\theta_1}a_0, e^{j\theta_1}a_1, e^{j\theta_1}a_2, e^{j\theta_1}a_3 \ldots, e^{j\theta_1}a_{M-1}],$$

and

$$B_M = [e^{j\theta_2}b_0, e^{j\theta_2}b_1, e^{j\theta_2}b_2, e^{j\theta_2}b_3, \ldots, e^{j\theta_2}b_{M-1}].$$

In some embodiments, the data filled on the K subcarriers is a sequence S of length 4*M, the sequence S is composed of two sequences each having a length of 2*M, and S = [$A_{2*M}$, $B_{2*M}$].

$A_{2*M}$ denotes a first sequence of length 2*M, $B_{2*M}$ denotes a second sequence of length 2*M, and K = 4*M.

In some embodiments, $A_{2*M}$ and $B_{2*M}$ include at least one of the following:

$$A_{2*M} = [A_M, B_M], \text{ and } B_{2*M} = [-A_M, B_M];$$

$$A_{2*M} = [A_M, B_M], \text{ and } B_{2*M} = [-A_M, -B_M];$$

$$A_{2*M} = [-A_M, -B_M], \text{ and } B_{2*M} = [-A_M, B_M];$$

or

$$A_{2*M} = [-A_M, -B_M], \text{ and } B_{2*M} = [A_M, -B_M].$$

In some other embodiments, $A_{2*M}$ and $B_{2*M}$ include the following:

$$A_{2*M} = [e^{j\theta_1}A_M, e^{j\theta_2}B_M], \text{ and } B_{2*M} = [e^{j\theta_3}A_M, e^{j\theta_4}B_M];$$

where (θ1 - θ2) - (θ3 - θ4) = Q*180° or |θ1 - θ2| - |θ3 - θ4| = Q*180°, and Q is an integer.

In some embodiments, the data filled on the K subcarriers is a sequence S of length 8*M, the sequence S is composed of two sequences each having a length of 4*M, and S = [$A_{4*M}$, $B_{4*M}$].

$A_{4*M}$ denotes a first sequence of length 4*M, $B_{4*M}$ denotes a second sequence of length 4*M, and K = 8*M.

In some embodiments, $A_{4*M}$ and $B_{4*M}$ include at least one of the following:

$$A_{4*M} = [A_{2*M}, B_{2*M}], \text{ and } B_{4*M} = [-A_{2*M}, B_{2*M}];$$

$$A_{4*M} = [A_{2*M}, B_{2*M}], \text{ and } B_{4*M} = [-A_{2*M}, -B_{2*M}];$$

$$A_{4*M} = [-A_{2*M}, -B_{2*M}], \text{ and } B_{4*M} = [-A_{2*M}, B_{2*M}];$$

or

$$A_{4*M} = [-A_{2*M}, -B_{2*M}], \text{ and } B_{4*M} = [A_{2*M}, -B_{2*M}].$$

In some other embodiments, $A_{4*M}$ and $B_{4*M}$ include the following:

$$A_{4*M} = [e^{j\theta_5}A_{2*M}, e^{j\theta_6}B_{2*M}], \text{ and } B_{4*M} = [e^{j\theta_7}A_{2*M}, e^{j\theta_8}B_{2*M}];$$

where (θ5 - θ6) - (θ7 - θ8) = Q*180° or |θ5 - θ6| - |θ7 - θ8| = Q*180°, and Q is an integer.

In some embodiments, the data filled on the K subcarriers is a sequence S of length $2^{i+2}$*M, the sequence S is composed of two sequences each having a length of $2^{i+1}$*M, and S = [$A_{2^{i+1}*M}$, $B_{2^{i+1}*M}$].

$A_{2^{i+1}*M}$ denotes a first sequence of length $2^{i+1}$*M, and $B_{2^{i+1}*M}$ denotes a second sequence of length $2^{i+1}$*M, where K = $2^{i+2}$*M, i is an integer greater than or equal to 0, and M is an integer greater than or equal to 1.

In some embodiments, $A_{2^{i+1}*M}$ and $B_{2^{i+1}*M}$ include at least one of the following:

$$A_{2^{i+1}*M} = [A_{2^i*M}, B_{2^i*M}], \text{ and } B_{2^{i+1}*M} = [-A_{2^i*M}, B_{2^i*M}];$$

$$A_{2^{i+1}*M} = [A_{2^i*M}, \ B_{2^i*M}], \text{ and } B_{2^{i+1}*M} = [-A_{2^i*M}, -B_{2^i*M}];$$

$$A_{2^{i+1}*M} = [-A_{2^i*M}, -B_{2^i*M}], \text{ and } B_{2^{i+1}*M} = [-A_{2^i*M}, \ B_{2^i*M}];$$

or

$$A_{2^{i+1}*M} = [-A_{2^i*M}, -B_{2^i*M}], \text{ and } B_{2^{i+1}*M} = [A_{2^i*M}, \ -B_{2^i*M}];$$

where i is an integer greater than or equal to 0.

In some other embodiments, $A_{2^{i+1}*M}$ and $B_{2^{i+1}*M}$ include at least one of the following:

$$A_{2^{i+1}*M} = [e^{j\theta_1^i} A_{2^i*M}, \ e^{j\theta_2^i} B_{2^i*M}], \text{ and } B_{2^{i+1}*M} = [e^{j\theta_3^i} A_{2^i*M}, \ e^{j\theta_4^i} B_{2^i*M}];$$

where $(\theta_1^i - \theta_2^i) - (\theta_3^i - \theta_4^i) = Q*180°$ or $|\theta_1^i - \theta_2^i| - |\theta_3^i - \theta_4^i| = Q*180°$, and Q is an integer.

In some embodiments, the first sequence and the second sequence are a Gray complementary sequence pair.

In some embodiments, the first sequence is $A_{2^{i+1}*M} = [a_0, a_1, a_2, a_3..., a_{P-1}]$, the second sequence is $B_{2^{i+1}*M} = [b_0, b_1, b_2, b_3,..., b_{P-1}]$, and accordingly, the first sequence and the second sequence satisfy at least one of the following properties:

in the case where j = 0, $\sum_{n=0}^{P-1}(a_n \cdot a_n + b_n \cdot b_n) = 2P$; or

in the case where j ≠ 0, $\sum_{n=0}^{P-1-j}(a_n \cdot a_{n+j} + b_n \cdot b_{n+j}) = 0$;

where P = $2^{i+1}$ * M, and i is an integer greater than or equal to 0.

In some other embodiments, the first sequence is $A_{2^i*M} = [a_0, a_1, a_2, a_3...., a_{L-1}]$, the second sequence is $B_{2^i*M} = [b_0, b_1, b_2, b_3, ..., b_{L-1}]$, and accordingly, the sequence $A_{2^i*M}$ and the sequence $B_{2^i*M}$ satisfy at least one of the following properties:

in the case where j = 0, $\sum_{n=0}^{L-1}(a_n \cdot a_n + b_n \cdot b_n) = 2L$; or

in the case where j ≠ 0, $\sum_{n=0}^{L-1-j}(a_n \cdot a_{n+j} + b_n \cdot b_{n+j}) = 0$;

where L = $2^i$ * M, and i is an integer greater than or equal to 0.

In some embodiments, in the case where K = $2^y$*M + X, where y is an integer greater than or equal to 0, M is an integer greater than or equal to 1, and X is an integer greater than or equal to 1, the method also includes the following: generating a sequence S of length $2^y$*M and a sequence $S_X$ of length X; filling the K subcarriers based on the sequence $S_X$ and the sequence S.

In some embodiments, generating the sequence $S_X$ of length X includes at least one of the following: generating the sequence $S_X$ of all zeros of length X; randomly generating the sequence $S_X$ of length X; generating the sequence $S_X$ of length X according to a preset formula; forming the sequence $S_X$ by the first X elements in the sequence S; forming the sequence $S_X$ by the last X elements in the sequence S; or forming the sequence $S_X$ by selecting X elements from the sequence S.

In some other embodiments, filling the K subcarriers based on the sequence $S_X$ and the sequence S includes generating a sequence $S_K$ of length K, where the generation of the sequence $S_K$ includes at least one of the following: $S_K = [S, S_X]$; or $S_K = [S_X, S]$.

FIG. 8 is a diagram illustrating the structure of an electronic device according to embodiments of the present application. The electronic device includes a processor 60 and a memory 61. One or more processors 60 may be provided in the electronic device. One processor 60 is used as an example in FIG. 8. The processor 60 and the memory 61 in the electronic device may be connected through a bus or in other manners. In FIG. 8, connection through a bus is used as an example.

As a computer-readable storage medium, the memory 61 may be configured to store a software program, a computer executable program, and a module, such as a program corresponding to the signal generation method in the embodiments of the present application and the module (resource module 201 and carrier module 202) corresponding to the signal generation apparatus in the embodiment of the present application. The processor 60 executes software programs, instructions, and modules stored in the memory 61 to perform functions and data processing of the electronic device, that is, to implement the preceding signal generation method.

The memory 61 may mainly include a program storage region and a data storage region. The program storage region may store an operating system and a program required by at least one function. The data storage region may store data created based on the use of the electronic device. Additionally, the memory 61 may include a high-speed random-access memory and may also include a non-volatile memory, for example, at least one magnetic disk memory, a flash memory, or another non-volatile solid-state memory. In some examples, the memory 61 may also include memories remotely disposed with respect to the processor 60. These remote memories may be connected to the electronic device via a network. Examples of the preceding network include but are not limited to, the Internet, an intranet, a local area network, a mobile communication network, and a combination thereof.

An embodiment of the present application also provides a storage medium containing computer-executable instructions that, when executed by a computer processor, is used for performing a signal generation method.

In an embodiment, the signal generation method includes configuring a signal to occupy at least one time-domain symbol in the time domain and at least one subcarrier in the frequency domain, where the bandwidth in the frequency domain includes N subcarriers, and N is greater than or equal to 1; determining information carried on the N subcarriers.

From the preceding description of embodiments, it is apparent to those skilled in the art that the present application may be implemented by software plus necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the signal generation method in the embodiments of the present application.

It is to be noted that units and modules involved in the embodiments of the preceding apparatus are just divided according to functional logic, and the division is not limited to this, as long as the corresponding functions can be achieved. Additionally, the names of functional units are just intended for distinguishing and are not to limit the scope of the present application.

It is to be understood by those of ordinary skill in the art that some or all operations and apparatus in the preceding method and function modules/units in the device may be implemented as software, firmware, hardware, and suitable combinations thereof.

In the hardware embodiments, the division of the preceding function modules/units may not correspond to the division of physical components. For example, one physical component may have multiple functions, or one function or operation may be performed jointly by several physical components. Some or all physical components may be implemented as software executed by a processor, such as a central processing unit, a digital signal processor, or a microprocessor, may be implemented as hardware, or may be implemented as integrated circuits, such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital video disc (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in a modulated data signal such as a carrier wave or other transport mechanism and may include any information delivery medium.

The above content, with reference to the drawings, illustrates some embodiments of the present application, but is not intended to limit the scope of the claims of the present application. Any modifications, equivalent substitutions, or improvements made by those skilled in the art without departing from the scope and essence of the present application should fall within the scope of the claims of the present application.

**Claims**

1. A signal generation method, comprising:

   configuring a signal to occupy at least one time-domain symbol in a time domain and at least one subcarrier in a frequency domain, wherein a bandwidth in the frequency domain comprises N subcarriers, and N is greater than or equal to 1; and
   determining information carried on the N subcarriers.

2. The method according to claim 1, wherein determining the information carried on the N subcarriers comprises at least one of the following:

   N1 subcarriers at an upper boundary of the bandwidth are used as a guard bandwidth, wherein N1 is greater than or equal to 0 and less than or equal to N;
   N2 subcarriers at a lower boundary of the bandwidth are used as a guard bandwidth, wherein N2 is greater than or equal to 0 and less than or equal to N;
   N3 subcarriers at a center of the N subcarriers are not filled with data or are filled with data of 0, wherein N3 is greater than or equal to 0 and less than or equal to N; or
   K subcarriers among the N subcarriers are filled with data, wherein K is greater than or equal to 1 and less than or equal to N.

3. The method according to claim 2, wherein positions of the K subcarriers comprise at least one of the following:

   remaining subcarriers after removing the N1 subcarriers and the N2 subcarriers from the N subcarriers; or
   remaining subcarriers after removing the N1 subcarriers, the N2 subcarriers, and the N3 subcarriers from the N subcarriers.

4. The method according to claim 2, wherein a method for determining positions of the K subcarriers comprises:

   dividing remaining subcarriers after removing the N1 subcarriers and the N2 subcarriers from the N subcarriers into K subcarrier groups, wherein each subcarrier group of the K subcarrier groups comprises G subcarriers, wherein G is an integer greater than or equal to 1; and
   selecting one subcarrier from the each subcarrier group of the K subcarrier groups to form the K subcarriers.

5. The method according to claim 2, wherein a method for determining positions of the K subcarriers comprises:

   dividing the N subcarriers into K subcarrier groups, wherein each subcarrier group of the K subcarrier groups comprises G subcarriers, wherein G is an integer greater than or equal to 1; and
   selecting one subcarrier from the each subcarrier group of the K subcarrier groups to form the K subcarriers.

6. The method according to claim 4 or 5, wherein subcarriers forming the K subcarriers have a same index in the respective K subcarrier groups.

7. The method according to any of claims 3, 4, or 5, wherein in a case where a selected subcarrier of the K subcarriers belongs to the N3 subcarriers, the selected subcarrier is not filled with data or is filled with data of 0.

8. The method according to claim 5, wherein in a case where a selected subcarrier of the K subcarriers belongs to the N1 subcarriers, the selected subcarrier is not filled with data or is filled with data of 0.

9. The method according to claim 5, wherein in a case where a selected subcarrier of the K subcarriers belongs to the N2 subcarriers, the selected subcarrier is not filled with data or is filled with data of 0.

10. The method according to claim 4 or 5, wherein in a case where the signal supports at least two subcarrier spacings, a configuration of G comprises that:

    the at least two subcarrier spacings comprise $f_{sc}$ and $2^{-n} \cdot f_{sc}$;
    in a case where a subcarrier spacing of the at least two subcarrier spacings is $f_{sc}$ and G is configured as y, G is configured as $y \cdot 2^n$ in a case where the subcarrier spacing is $2^{-n} \cdot f_{sc}$, wherein y is an integer greater than or equal to 1, and n is an integer greater than or equal to 1.

**11.** The method according to claim 10, wherein the configuration of G comprises at least one of the following:

in a case where the subcarrier spacing is 30 KHz and G is configured as 1, G is configured as 2 in a case where the subcarrier spacing is 15 KHz; or
in a case where the subcarrier spacing is 60 KHz and G is configured as 1, G is configured as 2 in a case where the subcarrier spacing is 30 KHz, and G is configured as 4 in a case where the subcarrier spacing is 15 KHz.

**12.** The method according to claim 2, wherein the data filled on the K subcarriers is a sequence S of length 2*M, the sequence S is composed of two sequences each having a length of M, and S = $[A_M, B_M]$;
wherein $A_M$ denotes a first sequence of length M, $B_M$ denotes a second sequence of length M, and K = 2*M.

**13.** The method according to claim 12, wherein $A_M$ and $B_M$ comprise at least one of the following:

$$A_M = [a_0, a_1, a_2, a_3 \ldots, a_{M-1}], \text{ and } B_M = [b_0, b_1, b_2, b_3, \ldots, b_{M-1}];$$

$$A_M = [a_0, a_1, a_2, a_3 \ldots, a_{M-1}], \text{ and } B_M = [-b_0, -b_1, -b_2, -b_3, \ldots, -b_{M-1}];$$

$$A_M = [-a_0, -a_1, -a_2, -a_3 \ldots, -a_{M-1}], \text{ and } B_M = [b_0, b_1, b_2, b_3, \ldots, b_{M-1}];$$

or

$$A_M = [-a_0, -a_1, -a_2, -a_3 \ldots, -a_{M-1}], \text{ and } B_M = [-b_0, -b_1, -b_2, -b_3, \ldots, -b_{M-1}].$$

**14.** The method according to claim 2, wherein the data filled on the K subcarriers is a sequence S of length 4*M, the sequence S is composed of two sequences each having a length of 2*M, and S=$[A_{2*M}, B_{2*M}]$;
wherein $A_{2*M}$ denotes a first sequence of length 2*M, $B_{2*M}$ denotes a second sequence of length 2*M, and K = 4*M.

**15.** The method according to claim 14, wherein $A_{2*M}$ and $B_{2*M}$ comprise at least one of the following:

$$A_{2*M} = [A_M, B_M], \text{ and } B_{2*M} = [-A_M, B_M];$$

$$A_{2*M} = [A_M, B_M], \text{ and } B_{2*M} = [-A_M, -B_M];$$

$$A_{2*M} = [-A_M, -B_M], \text{ and } B_{2*M} = [-A_M, B_M];$$

or

$$A_{2*M} = [-A_M, -B_M], \text{ and } B_{2*M} = [A_M, -B_M].$$

**16.** The method according to claim 2, wherein the data filled on the K subcarriers is a sequence S of length 8*M, the sequence S is composed of two sequences each having a length of 4*M, and S=$[A_{4*M}, B_{4*M}]$;
wherein $A_{4*M}$ denotes a first sequence of length 4*M, $B_{4*M}$ denotes a second sequence of length 4*M, and K = 8*M.

**17.** The method according to claim 16, wherein $A_{4*M}$ and $B_{4*M}$ comprise at least one of the following:

$$A_{4*M} = [A_{2*M}, B_{2*M}], \text{ and } B_{4*M} = [-A_{2*M}, B_{2*M}];$$

$$A_{4*M} = [A_{2*M}, B_{2*M}], \text{ and } B_{4*M} = [-A_{2*M}, -B_{2*M}];$$

$$A_{4*M} = [-A_{2*M}, -B_{2*M}], \text{ and } B_{4*M} = [-A_{2*M}, B_{2*M}];$$

or

$$A_{4*M} = [-A_{2*M}, -B_{2*M}], \text{ and } B_{4*M} = [A_{2*M}, -B_{2*M}].$$

**18.** The method according to claim 2, wherein the data filled on the K subcarriers is a sequence S of length $2^{i+2}*M$, the sequence S is composed of two sequences each having a length of $2^{i+1}*M$, and S = $[A_{2^{i+1}*M}, B_{2^{i+1}*M}]$;

wherein $A_{2^{i+1}*M}$ denotes a first sequence of length $2^{i+1}*M$, and $B_{2^{i+1}*M}$ denotes a second sequence of length $2^{i+1}*M$;

wherein K = $2^{i+Z}*M$, i is an integer greater than or equal to 0, and M is an integer greater than or equal to 1.

**19.** The method according to claim 18, wherein $A_{2^{i+1}*M}$ and $B_{2^{i+1}*M}$ comprise at least one of the following:

$$A_{2^{i+1}*M} = [A_{2^i*M}, B_{2^i*M}], \text{ and } B_{2^{i+1}*M} = [-A_{2^i*M}, B_{2^i*M}];$$

$$A_{2^{i+1}*M} = [A_{2^i*M}, B_{2^i*M}], \text{ and } B_{2^{i+1}*M} = [-A_{2^i*M}, -B_{2^i*M}];$$

$$A_{2^{i+1}*M} = [-A_{2^i*M}, -B_{2^i*M}], \text{ and } B_{2^{i+1}*M} = [-A_{2^i*M}, B_{2^i*M}]; \text{ or}$$

$$A_{2^{i+1}*M} = [-A_{2^i*M}, -B_{2^i*M}], \text{ and } B_{2^{i+1}*M} = [A_{2^i*M}, -B_{2^i*M}],$$

wherein i is an integer greater than or equal to 0.

**20.** The method according to claim 12, wherein $A_M$ and $B_M$ comprise:

$$A_M = [e^{j\theta_1}a_0, e^{j\theta_1}a_1, e^{j\theta_1}a_2, e^{j\theta_1}a_3 \ldots, e^{j\theta_1}a_{M-1}];$$

and

$$B_M = [e^{j\theta_2}b_0, e^{j\theta_2}b_1, e^{j\theta_2}b_2, e^{j\theta_2}b_3, \ldots, e^{j\theta_2}b_{M-1}].$$

**21.** The method according to claim 14, wherein $A_{2*M}$ and $B_{2*M}$ comprise:

$$A_{2*M} = [e^{j\theta_1}A_M, e^{j\theta_2}B_M], \text{ and } B_{2*M} = [e^{j\theta_3}A_M, e^{j\theta_4}B_M];$$

wherein

$$(\theta 1 - \theta 2) - (\theta 3 - \theta 4) = Q*180° \text{ or } |\theta 1 - \theta 2| - |\theta 3 - \theta 4| = Q*180°$$

, and Q is an integer.

**22.** The method according to claim 16, wherein $A_{4*M}$ and $B_{4*M}$ comprise:

$$A_{4*M} = [e^{j\theta_5}A_{2*M}, e^{j\theta_6}B_{2*M}], \text{ and } B_{4*M} = [e^{j\theta_7}A_{2*M}, e^{j\theta_8}B_{2*M}];$$

wherein (θ5 - θ6) - (θ7 - θ8) = Q*180° or |θ5 - θ6| - |θ7 - θ8|= Q*180°, and Q is an integer.

**23.** The method according to claim 18, wherein $A_{2^{i+1}*M}$ and $B_{2^{i+1}*M}$ comprise at least one of the following:

$$A_{2^{i+1}*M} = [e^{j\theta_1^i}A_{2^i*M}, \; e^{j\theta_2^i}B_{2^i*M}], \text{ and } B_{2^{i+1}*M} = [e^{j\theta_3^i}A_{2^i*M}, \; e^{j\theta_4^i}B_{2^i*M}];$$

$$(\theta_1^i - \theta_2^i) - (\theta_3^i - \theta_4^i) = Q*180° \text{ or } |\theta_1^i - \theta_2^i| - |\theta_3^i - \theta_4^i| = Q*180°$$

wherein , and Q is an integer.

24. The method according to any one of claims 12, 14, 16, or 18, wherein the first sequence and the second sequence are a Gray complementary sequence pair.

25. The method according to any one of claims 12, 14, 16, or 18, wherein the first sequence $A_{2^{i+1}*M} = [a_0, a_1, a_2, a_3..., a_{P-1}]$, the second sequence $B_{2^{i+1}*M} = [b_0, b_1, b_2, b_3, ..., b_{P-1}]$, and the first sequence and the second sequence satisfy at least one of the following properties:

in a case where $j = 0, \; \sum_{n=0}^{P-1}(a_n \cdot a_n + b_n \cdot b_n) = 2P$ ; or

in a case where $j \neq 0, \; \sum_{n=0}^{P-1-j}(a_n \cdot a_{n+j} + b_n \cdot b_{n+j}) = 0$ ;

wherein $P = 2^{i+1}*M$, and i is an integer greater than or equal to 0.

26. The method according to any one of claims 12, 14, 16, or 18, wherein the first sequence $A_{2^i*M} = [a_0, a_1, a_2, a_3..., a_{L-1}]$, the second sequence $B_{2^i*M} = [b_0, b_1, b_2, b_3, ..., b_{L-1}]$, and the first sequence $A_{2^i*M}$ and the second sequence $B_{2^i*M}$ satisfy at least one of the following properties:

in a case where $j = 0, \; \sum_{n=0}^{L-1}(a_n \cdot a_n + b_n \cdot b_n) = 2L$ ; or

in a case where $j \neq 0, \; \sum_{n=0}^{L-1-j}(a_n \cdot a_{n+j} + b_n \cdot b_{n+j}) = 0$ ;

wherein $L = 2^i * M$, and i is an integer greater than or equal to 0.

27. The method according to any one of claims 12 to 26, wherein in a case where $K = 2^y*M + X$, wherein y is an integer greater than or equal to 0, M is an integer greater than or equal to 1, and X is an integer greater than or equal to 1, the method further comprises:

generating a sequence S of length $2^y*M$ and a sequence $S_X$ of length X; and
filling the K subcarriers based on the sequence $S_X$ and the sequence S.

28. The method according to claim 27, wherein generating the sequence $S_X$ of length X comprises at least one of the following:

generating the sequence $S_X$ of all zeros of length X;
randomly generating the sequence $S_X$ of length X;
generating the sequence $S_X$ of length X according to a preset formula;
forming the sequence $S_X$ by first X elements in the sequence S;
forming the sequence $S_X$ by last X elements in the sequence S; or
forming the sequence $S_X$ by selecting X elements from the sequence S.

29. The method according to claim 27, wherein filling the K subcarriers based on the sequence $S_X$ and the sequence S comprises:
generating a sequence $S_K$ of length K, wherein the generation of the sequence $S_K$ comprises at least one of the following:

$$S_K = [S, S_X];$$

or

$$S_K = [S_X, \ S].$$

30. An electronic device, comprising:

one or more processors; and
a memory configured to store one or more programs; wherein the one or more programs, when executed by the one or more processors, cause the one or more processors to perform the method of any one of claims 1 to 29.

31. A computer-readable storage medium storing a computer program that, when executed by a processor, causes the processor to perform the method of any one of claims 1 to 29.

$$S_K = [S_X, \ S].$$

Configure a signal to occupy at least one time-domain symbol in the time domain and at least one subcarrier in the frequency domain ∿ 110

Determine information carried on the N subcarriers ∿ 120

**FIG. 1**

N subcarriers
of bandwidth
of LP-WUS

N1 subcarriers

N3 subcarriers

K subcarriers

N2 subcarriers

**FIG. 2**

N subcarriers
of bandwidth
of LP-WUS

N1 subcarriers

K subcarriers

N2 subcarriers

**FIG. 3**

N subcarriers
of bandwidth
of LP-WUS

N1 subcarriers

G subcarriers

G subcarriers

G subcarriers

K subcarriers

N2 subcarriers

**FIG. 4**

**FIG. 5**

**FIG. 6**

201                                    202

| Resource module | | Carrier module |

**FIG. 7**

61

| Memory |

62

| Input apparatus |

63

| Output apparatus |

60

| Processor |

**FIG. 8**

EP 4 546 888 A1

## INTERNATIONAL SEARCH REPORT

| | International application No. |
|---|---|
| | **PCT/CN2023/108407** |

**A. CLASSIFICATION OF SUBJECT MATTER**

H04W52/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; WPABSC; ENTXTC; CJFD; VEN; WPABS; ENTXT; 3GPP; IEEE: 低功率, 低功耗, 唤醒, 信号, 格雷, 互补, 序列, 映射, 子载波, 组, 间隔; low power, wake up, LP-WUS, LP-WUR, golay, complementary, sequence, map, subcarrier, group, space, SCS

**C. DOCUMENTS CONSIDERED TO BE RELEVANT**

| Category* | Citation of document, with indication, where appropriate, of the relevant passages | Relevant to claim No. |
|---|---|---|
| PX | CN 115915361 A (ZTE CORP.) 04 April 2023 (2023-04-04) claims 1-31, and description, paragraphs [0021]-[0302], and figures 1-8 | 1-31 |
| X | US 2020288396 A1 (LG ELECTRONICS INC.) 10 September 2020 (2020-09-10) description, paragraphs [0077]-[0586], and figures 1-17 | 1-11, 30-31 |
| Y | US 2020288396 A1 (LG ELECTRONICS INC.) 10 September 2020 (2020-09-10) description, paragraphs [0077]-[0586], and figures 1-17 | 12-29 |
| Y | WO 2018084440 A1 (LG ELECTRONICS INC.) 11 May 2018 (2018-05-11) description, paragraphs [0290]-[0397], and figures 13-16 | 12-29 |
| Y | CN 102165726 A (MARVELL WORLD TRADE LTD.) 24 August 2011 (2011-08-24) description, paragraph [0109] | 13, 27-29 |
| X | CN 109314929 A (HUAWEI TECHNOLOGIES CO., LTD.) 05 February 2019 (2019-02-05) description, paragraphs [0046]-[0101], and figures 1-18 | 1-11, 30-31 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 September 2023** | **07 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/108407** |

**C.    DOCUMENTS CONSIDERED TO BE RELEVANT**

| Category* | Citation of document, with indication, where appropriate, of the relevant passages | Relevant to claim No. |
| --- | --- | --- |
| X | INTERDIGITAL INC. ""R1-2109954 Wake-up signal for low power wake-up radio"" *3GPP tsg_ran\wg1_rl1*, 01 October 2021 (2021-10-01), sections 1-2 | 1-11, 30-31 |
| A | US 2019306811 A1 (MARVELL WORLD TRADE LTD.) 03 October 2019 (2019-10-03) entire document | 1-31 |

Form PCT/ISA/210 (second sheet) (July 2022)

**INTERNATIONAL SEARCH REPORT**
**Information on patent family members**

International application No.

**PCT/CN2023/108407**

| Patent document cited in search report | | | Publication date (day/month/year) | Patent family member(s) | | | Publication date (day/month/year) |
|---|---|---|---|---|---|---|---|
| CN | 115915361 | A | 04 April 2023 | None | | | |
| US | 2020288396 | A1 | 10 September 2020 | US | 11184853 | B2 | 23 November 2021 |
| | | | | WO | 2019050191 | A1 | 14 March 2019 |
| WO | 2018084440 | A1 | 11 May 2018 | None | | | |
| CN | 102165726 | A | 24 August 2011 | US | 2012201276 | A1 | 09 August 2012 |
| | | | | US | 8599900 | B2 | 03 December 2013 |
| | | | | JP | 2012504378 | A | 16 February 2012 |
| | | | | JP | 5462267 | B2 | 02 April 2014 |
| | | | | WO | 2010037100 | A1 | 01 April 2010 |
| | | | | US | 2014321479 | A1 | 30 October 2014 |
| | | | | US | 9525759 | B2 | 20 December 2016 |
| | | | | US | 2010080266 | A1 | 01 April 2010 |
| | | | | US | 8165185 | B2 | 24 April 2012 |
| | | | | US | 2012207192 | A1 | 16 August 2012 |
| | | | | US | 8774251 | B2 | 08 July 2014 |
| | | | | EP | 2359511 | A1 | 24 August 2011 |
| | | | | EP | 2359511 | B1 | 15 August 2018 |
| | | | | JP | 2014112900 | A | 19 June 2014 |
| | | | | JP | 5669052 | B2 | 12 February 2015 |
| | | | | CN | 102165726 | B | 20 August 2014 |
| | | | | CN | 104104462 | B | 22 September 2017 |
| | | | | CN | 104104462 | A | 15 October 2014 |
| CN | 109314929 | A | 05 February 2019 | WO | 2018141254 | A1 | 09 August 2018 |
| | | | | KR | 20190067849 | A | 17 June 2019 |
| | | | | US | 2020220641 | A1 | 09 July 2020 |
| | | | | US | 11489610 | B2 | 01 November 2022 |
| | | | | JP | 2020501405 | A | 16 January 2020 |
| | | | | EP | 3513603 | A1 | 24 July 2019 |
| | | | | EP | 3513603 | A4 | 25 September 2019 |
| | | | | US | 2018227070 | A1 | 09 August 2018 |
| | | | | US | 10644820 | B2 | 05 May 2020 |
| | | | | IN | 201937014938 | A | 02 August 2019 |
| | | | | CN | 109314929 | B | 07 May 2021 |
| US | 2019306811 | A1 | 03 October 2019 | WO | 2019194855 | A1 | 10 October 2019 |
| | | | | US | 10772056 | B2 | 08 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211053984